# EUROPÄISCHE PATENTSCHRIFT

(11) **EP 3 201 494 B1**
(45) Veröffentlichungstag und Bekanntmachung des Hinweises auf die Patenterteilung: **11.09.2019**
(21) Anmeldenummer: 15770805.8
(22) Anmeldetag: 25.09.2015
(51) Int. Cl.: F16H 7/08, F16H 7/18

(54) **KETTENTRIEB MIT MEHREREN GLEITELEMENTEN**
CHAIN DRIVE HAVING A PLURALITY OF SLIDING ELEMENTS
TRANSMISSION À CHAÎNE MUNIE DE PLUSIEURS ÉLÉMENTS DE GLISSEMENT

(30) Priorität: 02.10.2014 DE 102014014720; 08.07.2015 DE 102015008877
(43) Veröffentlichungstag der Anmeldung: 09.08.2017
(73) Patentinhaber: IWIS Motorsysteme GmbH & Co. KG, 81369 München (DE)
(72) Erfinder: PERISSINOTTO, Renzo, 85221 Dachau (DE); GEIBEL, Henning, 82234 Weßling (DE)
(74) Vertreter: Grünecker Patent- und Rechtsanwälte PartG mbB
(86) Internationale Anmeldenummer: PCT/EP2015/001908
(87) Internationale Veröffentlichungsnummer: WO 2016/050345

(56) Entgegenhaltungen:
- EP-A1- 0 877 179
- WO-A2-2011/056719
- DE-A1- 19 536 643
- US-B1- 6 358 169
- US-B1- 6 375 587

## Beschreibung

Die vorliegende Erfindung betrifft einen Kettentrieb gemäß Oberbegriff von Anspruch 1.

Ein solcher Kettentrieb ist z.B. aus der EP 0877179 A1 bekannt. Es handelt sich um einen Steuerkettentrieb eines Verbrennungsmotors, bei dem eine Steuerkette die Kurbelwelle mit der Nockenwelle koppelt. Im Bereich des Zugtrums ist eine Führungsschiene angeordnet, die zwei im ungeführten Abstand zueinander angeordnete Gleitabschnitte aufweist. Das bedeutet, dass die Steuerkette in einem Abschnitt zwischen den beiden Gleitabschnitten nicht mit ihren Kettenrücken anliegt. Die beiden Gleitabschnitte werden mittels eines Trägers miteinander verbunden. Die Gleitabschnitte sind aus einem reibfesten Kunststoff hergestellt, während der Träger aus einem hochbelastbaren Polyamid mit Faserzusätzen besteht. Hierdurch soll eine funktionsgerechte Kettenführung erreicht werden, die zur Gewichtsreduktion und zur Werkstoffeinsatzreduktion beiträgt. Im Lostrum des Kettentriebs befindet sich eine Spannschiene, deren Krümmungsverlauf sich mit dem Verschleiß der Antriebskette verändern kann, wodurch eine Längung der Antriebskette über die Betriebsdauer kompensiert wird. Oftmals werden auch schwenkbar angeordnete Spannschienen verwendet, die mittels eines Kettenspanners an das Lostrum der Antriebskette angedrückt werden.

Ein weiteres Gleitelement zur Reduktion des Herstellungsaufwands und der Reibung ist aus der DE 102007026939 A1 bekannt. Die Gleitfläche weist vertiefte Abschnitte auf, wodurch sie in anliegende und nicht anliegende Abschnitte unterteilt wird.

Spannschienen mit mehreren Gleitelementen sind in der DE 19536643 A1 und der US 6358169 A1 beschrieben. Allerdings wird die Kette zwischen den Gleitelementen hindurchgeführt. Mehrere am Motorblock angebrachte Blattfederspannvorrichtungen sind in der US 6375587 B1 gezeigt.

Obwohl die bekannten Vorrichtungen bereits gute Wirkungen in der Reibungsreduktion bieten, stellen sie im Hinblick auf hochdynamische Kettentriebe für Verbrennungsmotoren noch keine geeigneten Maßnahmen dar, um auch dem Schwingungsverhalten dieser Kettentriebe gerecht zu werden.

Es ist daher die Aufgabe der vorliegenden Erfindung, einen Kettentrieb der eingangs genannten Art bereitzustellen, der hinsichtlich des Schwingungsverhaltens verbesserte Führungs- und/oder Spannschienen mit geringer Reibung aufweist.

Diese Aufgabe wird durch einen Kettentrieb gemäß Anspruch 1 gelöst. Zum Zwecke der Definition wird unter einem Trum der Strangabschnitt der Antriebskette verstanden, der sich zwischen zwei in Laufrichtung nachfolgenden Kettenrädern erstreckt. Hinsichtlich der Länge eines Trums wird nur der Strangabschnitt zwischen den beiden in Laufrichtung nachfolgenden Kettenrädern betrachtet, der nicht mehr in vollem Eingriff mit dem jeweiligen Kettenrad steht. Das bedeutet, sobald ein Kettenglied der Antriebskette den von dem Kettenrad vorgegebenen Teilkreis verlässt (beim Auslauf) oder diesen erreicht (beim Einlauf), ist der Start bzw. Endpunkt für die Messung der Trumlänge definiert. Aufgrund der Tatsache, dass derartige Kettentriebe hochdynamische Eigenschaften aufweisen, bietet sich hier bevorzugt eine statische Betrachtung an. Insbesondere im Lostrum kann sich die Länge auch mit dem Verschleiß der Antriebskette verändern. Die Verhältnisse werden in aller Regel jedoch mit zunehmender Spannung durch die Spannschiene günstiger, weshalb hier bevorzugt die Länge im Neuzustand betrachtet wird.

Die Erfindung stellt neben einer Reibungsreduktion aufgrund der Aufteilung in verschiedene Gleitelemente auch eine ausreichende Schwingungsberuhigung bereit. Die Antriebskette soll möglichst nahe am Einlauf bzw. Auslauf der Kettenräder geführt werden, wobei dazwischen möglichst wenig Gleitflächen vorhanden sind, um die Reibung zu reduzieren und dennoch eine gute Führung bzw. Spannung der Antriebskette zu erhalten. Die Aufteilung in mindestens zwei Gleitelemente kann an der Führungsschiene oder der Spannschiene oder an beiden vorgenommen werden. Mittels dieses Konzepts lässt sich auch das Gewicht der jeweiligen Schienen reduzieren sowie die Material- und Herstellungskosten senken. Auch bietet diese Aufteilung Möglichkeiten zur Bauraumoptimierung. Aufgrund von Schwingungsanalysen können auch Gleitelemente genau in den Bereichen angeordnet werden, in denen Schwingungen besonders stark auftreten, weshalb die vorliegende Erfindung auch bei hochdynamischen Kettentrieben für Verbrennungsmotoren Einsatz finden kann.

Definitionsgemäß zählt zur Länge eines Trums auch der von der jeweiligen Führungsschiene oder der Spannschiene geführte Abschnitt. Ein ungeführter Abschnitt beginnt im Verhältnis zur Führungsschiene oder der Spannschiene genau dort, wo ein Kontakt zwischen der Hauptgleitfläche der Führungsschiene bzw. der Spannschiene gerade nicht mehr (beim Auslaufen aus der Schiene bzw. des Gleitelements) oder gerade wieder (beim Auflaufen auf die Schiene bzw. das Gleitelement) stattfindet. Die ungeführte Länge zwischen zwei Gleitelementen entspricht also der Länge der Antriebskette, die in diesem Abschnitt nicht von den beiden Gleitelementen geführt ist, also nicht mit dem Kettenrücken mit den Gleitflächen in Berührung steht. Die geführte Kettenlänge in einem Trum ergibt sich demnach aus der mit der Hauptgleitfläche in Berührung stehenden Längenabschnitten der Kette. Bei der ungeführten Kettenlänge kommen neben den ungeführten Abschnitten zwischen den Gleitelementen noch die ungeführten Abschnitte zwischen den Kettenrädern und den Gleitelementen eines Trums hinzu. Ein Gleitelement bildet eine einheitliche Führungsstruktur mit einem Auflaufen und einem Auslaufen der Kette und kann selbst wiederum mit reibungsreduzierenden Strukturen (z.B. Vertiefungen an der Gleitfläche) versehen sein.

Am wirkungsvollsten lässt sich die Erfindung gemäß einer Variante verwirklichen, bei der mindestens zwei Trume des Kettentriebs eine Führungs- oder eine Spannschiene mit mindestens zwei im Abstand zueinander angeordneten Gleitelementen aufweisen, wobei das Verhältnis von geführter Kettenlänge zu ungeführter Kettenlänger kleiner ist als 1 und die Summe der Längen der beiden ungeführten Abschnitte, der Antriebskette zwischen einem Gleitelement und dem jeweils nächsten Kettenrad kleiner ist als 0,5-mal der gesamten Länge des entsprechenden Trums. Für die meisten Kettentriebe eines Verbrennungsmotors führt diese Ausgestaltung zur Optimierung der Reibungsreduktion und des Schwingungsverhaltens.

Darüber hinaus kann gemäß einer Variante der ungeführte Abstand von mindestens zwei an einer Führungs- und/oder einer Spannschiene angeordneten Gleitelementen größer sein als 3-mal, bevorzugt 5-mal, die Kettenteilung der Antriebskette. Es befindet sich demnach ein beträchtlicher Anteil an ungeführter Länge der Antriebskette zwischen den beiden Gleitelementen, was maßgeblich zur Reibungsreduktion beiträgt und die zugehörige Schiene auch leichter ausfallen lässt.

Günstigerweise kann die führende Länge von mindestens zwei Gleitelementen einer Führungs- und/oder einer Spannschiene kleiner sein als 10-mal die Kettenteilung der Antriebskette. Es hat sich in der Praxis herausgestellt, dass derartige Längen ausreichend sind, eine Antriebskette in genügender Weise zu führen, ohne dass die Führungskräfte zu hoch werden. Allerdings ist es zu bevorzugen, wenn gemäß einer weiteren Ausführungsform die von den mindestens zwei Gleitelementen geführte Länge der Antriebskette größer ist als 2,5-mal, bevorzugt größer ist als 3-mal, die Kettenteilung der Antriebskette, damit die entsprechenden Führungskräfte in geeigneten Grenzen gehalten werden können.

Bei einer weiteren Ausführungsform ist vorgesehen, dass die Anzahl der Gleitelemente der an den beiden längsten Trumen anliegenden Führungs- und/oder Spannschiene(n) mindestens der Anzahl der Kettenräder des Kettentriebes plus 1, bevorzugt plus 2, entspricht. Es handelt sich hierbei um eine Auslegungsregel, die die erfindungsgemäß genannten Vorteile nochmals verstärkt und sich insbesondere bei größer werdenden Anzahl an Kettenrädern immer vorteilhafter bemerkbar macht. Deshalb ist gemäß einer Variante auch vorgesehen, dass die Anzahl der Kettenräder mindestens 3, bevorzugt genau 3, entspricht. Dies entspricht z.B. einem Steuertrieb mit zwei oben liegenden Nockenwellen. Zwar können zwischen den Nockenwellenkettenrädern auch Schienen vorgesehen werden. Aufgrund des geringen Abstands zwischen den beiden Nockenwellenkettenrädern bleiben diese Schienen bei der hier vorgenommenen Betrachtung aber außen vor. Es kommt vielmehr auf die längeren Trume des Kettentriebes an, damit diese ausreichend schwingungsberuhigt und reibungsreduziert werden.

Damit ein Baukastensystem Anwendung finden kann, können die Gleitelemente der Führungs- und/oder der Spannschiene die gleiche Größe und Form aufweisen. Zwar können die Gleitelemente auch einteiliger Bestandteil mit den anderen Elementen einer Führungs- bzw. einer Spannschiene sein. Es hat sich jedoch herausgestellt, dass insbesondere bei zielgerichteter Materialwahl eine montierte Ausgestaltung von Vorteil ist, bei der die Gleitelemente separate Bauteile darstellen.

Gemäß einer weiteren Variante ist deshalb vorgesehen, dass die Führungs- und/oder die Spannschiene einen Tragkörper aufweist bzw. aufweisen, an dem die Gleitelemente angebracht sind. Die Gleitelemente können z.B. in Form von Gleitbelagskörpern, die mittels verschiedener Verbindungstechniken angebracht werden, ausgestaltet sein oder eigenständige Elemente mit Tragstrukturen darstellen. Bevorzugt wird die Tragfunktion jedoch auch von dem Tragkörper übernommen. Eine günstige Anbringmethode ist das Verrasten mittels entsprechender Rastvorrichtungen an dem Tragkörper.

Bei einer Ausführungsform ist vorgesehen, dass der Träger mindestens zwei in seiner Hüllkontur identische Befestigungsabschnitte für die Gleitelemente aufweist. Das bedeutet, dass der Befestigungsabschnitt quasi eine Art Adapterform aufweist, die mit den identischen Gleitelementen in Verbindung gebracht werden kann. Sofern die wichtigsten hierfür erforderlichen Funktionsflächen bzw. -bereiche vorhanden sind, kommt es auf die restliche Ausgestaltung des Befestigungsabschnittes nicht an, weshalb hier von Hüllkontor gesprochen wird. In den meisten Fällen werden jedoch die Befestigungsabschnitte identisch ausgestaltet sein. Besonders einfach lassen sich Führungs- und Spannschienen aufbauen, wenn die Gleitelemente identische Baukastenteile sind. Bei dieser Variante werden also ausschließlich Gleitelemente eingesetzt, die als Gleichteile ausgestaltet sind. Sofern diese Gleitelemente bestimmte vorgegebene Längen bzw. vorgegebene Öffnungswinkel mit zugehörigen Krümmungsradien aufweisen, können unter Verwendung unterschiedlicher Träger auch unterschiedlich ausgestaltet Führungs- und/oder Spannschienen mit ein und derselben Gleitelementbauart erzeugt werden. Hierdurch lassen sich niedrige Herstellungskosten, insbesondere bei den im Automobilbau vorhandenen hohen Stückzahlen, erreichen.

Bevorzugt kann die Führungs- und/oder die Spannschiene zwei in einem Abstand zueinander angeordnete Seitenwangen aufweisen, zwischen denen teilweise die Gleitflächen der im ungeführten Abstand zueinander angeordneten Gleitelemente angeordnet sind, so dass ein Fensterdurchbruch zwischen den Gleitelementen und den Seitenwangen ausgebildet ist. Die Seitenwangen weisen bevorzugt in Belastungsrichtung einen sehr großen Querschnitt auf, können jedoch in Breitenrichtung der Spann- oder Führungsschiene verhältnismäßig dünn ausgestaltet werden. Hierdurch lassen sich relativ große Fensterdurchbrüche erzeugen, die besonders günstige Einbauverhältnisse schaffen. Die Seitenwangen können darüber hinaus auch noch zur seitlichen Führung der Kette herangezogen werden. Ausreichend hohe Seitenwangen führen zu einer guten Biegesteifigkeit der Schiene.

Darüber hinaus kann jedes Gleitelement eine in Laufrichtung der Antriebskette konvex gekrümmte Gleitfläche aufweisen, wobei die Winkelhalbierenden der beiden Öffnungswinkel der konvex gekrümmten Gleitflächen der Gleitelemente einer Führungs- und/oder eine Spannschiene in einem Winkel β ungleich 0° zueinander verlaufen. Die beiden Winkelhalbierenden sind nicht wie im oben beschriebenen Stand der Technik parallel zueinander ausgerichtet, sondern stehen bevorzugt in einem spitzen Winkel zueinander. In aller Regel weisen sie bevorzugt leicht voneinander weg. Hierdurch erfolgt eine bessere Anpassung an den Kettenlauf, so dass auch größere dazwischen liegende Lücken von einem Kettenabschnitt überbrückt werden können, ohne dass es in diesem Bereich zu größerer Schwingungsanregung kommt. Hierfür sorgt u.a. die im Winkel zueinander erfolgende Krafteinwirkung dieser beiden Gleitelemente.

Unter Öffnungswinkel wird hier der größte von der Gleitfläche aufgespannte Winkel verstanden. Der Gleitfläche sind aber nicht mehr Abrundungen an ihren Enden zuzurechnen. Die Messung des Öffnungswinkels beginnt erst dort, wo die "echte" Gleitfläche beginnt bzw. endet (also der Kontakt mit der Antriebskette vorhanden ist). Sofern die Gleitfläche einen gleichmäßigen Krümmungsradius aufweist, ist die Bestimmung der Winkelhalbierenden einfach. Weist die Gleitfläche zusätzlich zum zentralen Bereich einen Ein- und Auslaufbereich mit identischen Krümmungsradien auf, die jedoch kleiner sind als der Krümmungsradius des zentralen Bereichs der Gleitfläche, dann ist die Bestimmung in aller Regel ebenfalls noch relativ einfach. Schwieriger wird es, wenn sich der Krümmungsradius stetig ändert. Eventuell in der Gleitfläche vorhandene Öffnungen bzw. Vertiefungen werden dem Krümmungsverlauf entsprechend der angrenzenden Flächenbereiche ergänzt. Bevorzugt beträgt der Winkel β, der ungleich 0° sein soll, weniger als 180° und mehr als 5°, bevorzugt ≥ 15°. Sofern die Bestimmung der Gleitfläche bzw. deren konvex gekrümmter Länge Probleme bereitet bzw. schwierig erscheint, wird sich folgender Bestimmungsmethode bedient:
Es wird der Bereich bzw. Punkt mit dem größten Krümmungsradius bestimmt. Dieser liegt mit großer Wahrscheinlichkeit im Kontaktbereich der Gleitfläche zur Kette. Ausgehend von einem Punkt dieses Bereichs bzw. des Punktes wird sowohl in als auch gegen die Kettenlaufrichtung der Krümmungsradius bzw. die Veränderung des Krümmungsradius der Gleitfläche bestimmt. Sobald der Krümmungsradius nur noch 25 % des größten Krümmungsradius beträgt, bzw. diesen Wert unterschreitet, ist in der eingeschlagenen Richtung das (theoretische) vordere oder das hintere Ende der Gleitfläche erreicht und der Öffnungswinkel kann bestimmt werden. Bei dieser Bestimmungsmethode wird bei einem abrupten Abfall der Größe des Krümmungsradius von über auf unter 25 % des größten Krümmungsradius, der letzte Krümmungsradius ≥ 25 % des Krümmungsradius für die Bestimmung des Öffnungswinkels verwendet. Wenn der größte Krümmungsradius größer ist als 5000 mm (einschl. ∞), dann ist das (theoretische) vordere bzw. hintere Ende der Gleitfläche erreicht, wenn der Krümmungsradius 50 mm, bevorzugt 35 mm, erreicht bzw. unterschreitet.

Die Kette wird bevorzugt nicht entlang einer einheitlichen Kreisbahn in einem Trum geführt. Hierzu kann vorgesehen werden, dass die konvex gekrümmten Gleitflächen der Gleitelemente einer Führungs- und/oder einer Spannschiene voneinander verschiedene Krümmungsmittelpunkte aufweisen. D.h., dass die Gleitelemente so angeordnet sind, dass die Kette in unterschiedlicher Richtung geführt bzw. gespannt wird, wodurch sich eine zusätzliche Schwingungsberuhigung ergeben kann.

Im Folgenden werden Ausführungsbeispiele der vorliegenden Erfindung anhand von Zeichnungen näher erläutert. Es zeigen:
- Fig. 1: eine schematisch Vorderansicht eines Steuerkettentriebs,
- Fig. 2: eine erfindungsgemäße Führungsschiene in einer Seitenansicht,
- Fig. 3: die Führungsschiene aus Fig. 2 in einer perspektivischen Draufsicht,
- Fig. 4: eine schematische Vorderansicht eines weiteren Steuerkettentriebs,
- Fig. 5: eine perspektivische Darstellung der Führungsschiene aus Fig.4,
- Fig. 6: eine Explosionsdarstellung der Führungsschiene aus Fig. 5, wobei zur Vereinfachung ein Gleitelement weggelassen wurde,
- Fig. 7: eine vergrößerte perspektivische Darstellung eines Gleitelements,
- Fig. 8: eine perspektivische Unteransicht des Gleitelements aus Fig. 7,
- Fig. 9: eine Prinzipskizze zur Erläuterung der Anordnung der beiden Gleitelemente,
- Fig. 10: eine perspektivische Seitenansicht der Spannschiene aus Fig. 4,
- Fig. 11: einen Ausschnitt des Schwenkendes der Spannschiene in vergrößerten Schnittdarstellung und
- Fig. 12: einen Ausschnitt des vorderen Endes der Spannschiene aus Fig. 10 in einer vergrößerten Schnittdarstellung.

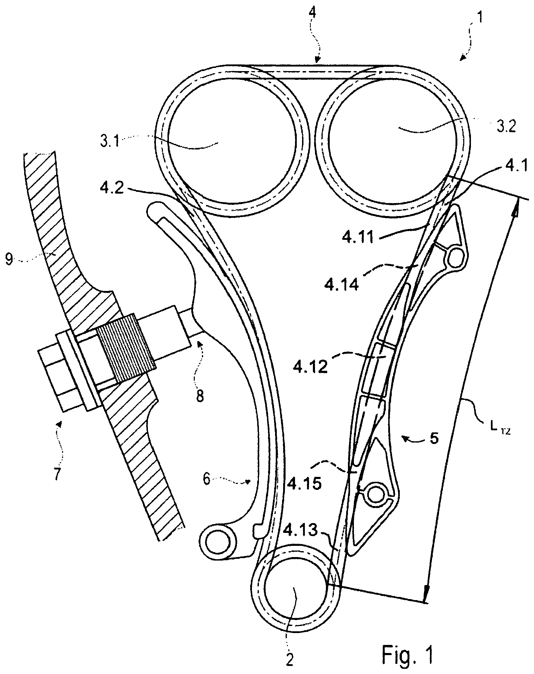

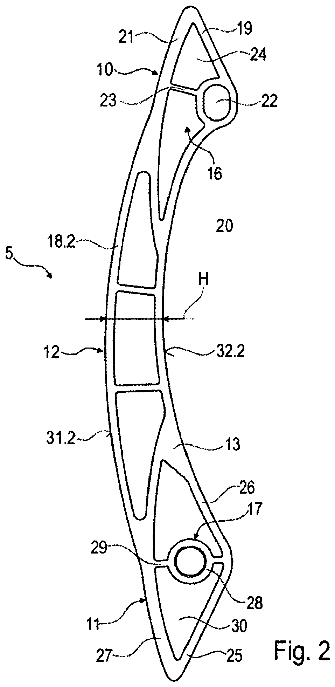

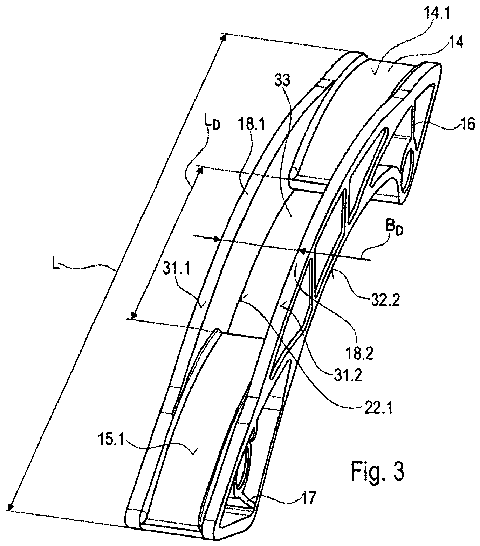

Der in Figur 1 dargestellte Steuerkettentrieb 1 für einen Verbrennungsmotor umfasst im Wesentlichen ein Kurbelwellenkettenrad 2, zwei nebeneinanderliegende Nockenwellenkettenräder 3.1 und 3.2, eine um diese herumgeführte Steuerkette 4 mit einer Teilung T (nicht eingezeichnet), eine am Motorgehäuse befestigte Führungsschiene 5, eine schwenkbar am Motorgehäuse angeordnete Spannschiene 6 und einen Kettenspanner 7, der mit seinem Spannkolben 8 auf die Spannschiene 6 aufdrückt. Im vorliegenden Fall ist der Kettenspanner 7 als sogenannter Einschraubkettenspanner ausgestaltet, der in eine Wandung 9 am Motorgehäuse eingeschraubt ist. Der Kettenspanner 7 könnte aber auch als Flansch- oder Anbaukettenspanner ausgeführt werden. Das Kurbelwellenkettenrad 2 treibt mittels der Steuerkette 4 die beiden Nockenwellenkettenräder 3.1 und 3.2 an. Dabei gleitet das Zugtrum 4.1 der Steuerkette 4 entlang der Führungsschiene 5 und das Lostrum 4.2 entlang der Spannschiene 6. Der Kettenspanner 7 muss eine ausreichend große Kraft auf die Spannschiene 6 ausüben, so dass ein sicheres Spannen der Steuerkette 4 über den gesamten Betriebsbereich des Verbrennungsmotors gewährleistet ist. Hierbei laufen hochdynamische Prozesse innerhalb des Kettenspanners 7 ab, der auch eine Dämpfungsfunktion bereitstellt. Im Folgenden wird unter Zuhilfenahme der Figuren 2 und 3 ein detaillierter Aufbau einer Ausführungsform einer Führungsschiene 5 näher erläutert, wie sie bei dem erfindungsgemäßen Kettentrieb gemäß Figur 1 eingesetzt ist.

Die Führungsschiene 5 ist im Wesentlichen in drei Bereiche unterteilt, nämlich den ersten Kontaktbereich 10 am Einlaufende der Führungsschiene 5, den zweiten Kontaktbereich 11 am Auslaufende der Führungsschiene 5 sowie den diese beiden miteinander verbindenden Nichtkontaktbereich 12. Die Führungsschiene 5 umfasst drei Bauelemente. Diese sind ein Tragkörper 13, ein erstes Gleitelement 14 am ersten Kontaktbereich 10, und ein zweites Gleitelement 15 am zweiten Kontaktbereich 11. Der Tragkörper 13 ist einstückig ausgeformt und besteht aus einem faserverstärkten Kunststoff. Der Tragkörper 13 ist strukturell unterteilt in eine etwa dreiecksförmige Tragstruktur 16 des ersten Kontaktbereichs 10, eine in etwa dreiecksförmige zweite Tragstruktur 17 des zweiten Kontaktbereichs 11 und zwei bogenförmige, die beiden Tragstrukturen 16 und 17 miteinander verbindende Seitenwangen 18.1, 18.2 des Nichtkontaktbereichs 12. Die Seitenwangen 18.1 und 18.2 bilden die Tragstruktur des Nichtkontaktbereichs 12.

Die erste Tragstruktur 16 ist fachwerkähnlich aufgebaut und umfasst eine gerade Stirnwand 19, eine konkav gekrümmte Rückwand 20 und eine konvex gekrümmte Vorderwand 21, auf der das erste Gleitelement 14 mit Gleitfläche 14.1 angeordnet ist. Im Treffpunkt der Stirnwand 29 und der Rückwand 20 ist eine Befestigungsöse 22 mit einem Langlochquerschnitt angeordnet. In etwa der Mitte der Breite der Führungsschiene 5 befindet sich ein in Längsrichtung sich erstreckender und die Fachwerkstruktur der ersten Tragstruktur 16 bis auf die Befestigungsöse 22 verschließende Stützwand 24.

Die zweite Tragstruktur 17 umfasst eine gerade Stirnwand 25, eine konkav gebogene Rückwand 26 und eine konvex gekrümmte, das zweite Gleitelement 15 tragende Vorderwand 27. In etwa der Mitte der zweiten Tragstruktur 17 befindet sich eine im Querschnitt kreisförmige Befestigungsöse 28. Eine Querstrebe 29 verbindet die Vorderwand 27 mit der Befestigungsöse 28, sowie die Befestigungsöse 28 mit dem Eckpunkt der Stirnwand 25 und der Rückwand 26. Die Fachwerkstruktur der zweiten Tragstruktur 17 ist in etwa mittig von einer Stützwand 30 bis auf die Befestigungsöse 28 verschlossen.

Die beiden Seitenwangen 18.1 und 18.2 weisen jeweils eine konvexe Oberseite 31.1 und 31.2 sowie eine konkave Unterseite 32.1 und 32.2 auf. Insgesamt sind die Seitenwangen 18.1, 18.2 bogenförmig ausgestaltet, wobei sich die Höhe H der Seitenwangen 18.1 und 18.2 von der Einlaufseite zur Auslaufseite der Führungsschiene 5 zumindest zwischen den beiden Kontaktbereichen 10 und 11 stetig vergrößert. Die Seitenwangen 18.1 und 18.2 sind als Biegeträger ausgestaltet und relativ schmal, aber hoch gehalten. Die beiden Seitenwangen 18.1 und 18.2 sind im Bereich zwischen den beiden Kontaktbereichen 10 und 11 nicht miteinander verbunden, so dass ein Fensterdurchbruch 33 gebildet ist. Die Breite B_{D} des Fensterdurchbruchs 33 entspricht im Wesentlichen der Breite der die Gleitflächen 14.1 und 15.1 bereitstellenden Gleitelemente 14 und 15. Die Länge L_{D} des Fensterdurchbruchs 33 entspricht ca. 0,33-mal der Länge L der Führungsschiene 5.

Aufgrund der Ausgestaltung der Führungsschiene 5 weist der Zugtrum 4.1 drei ungeführte Abschnitte zwischen dem Nockenwellenkettenrad 3.2 und dem Kurbelwellenkettenrad 2 auf. Das ist zum einen der Abschnitt 4.11 zwischen dem Nockenwellenkettenrad 3.2 und dem oberen Gleitelement 14, der Abschnitt 4.12 im Bereich des Fensterdurchbruchs 33 und der Abschnitt 4.13 zwischen dem unteren Gleitelement 15 und dem Kurbelwellenkettenrad 2. Dazwischen liegen die beiden geführten Abschnitte 4.14 und 4.15, die entsprechend mit der Gleitfläche 14.1 des Gleitelements 14 und der Gleitfläche 15.1 des Gleitelements 15 in Berührung stehen. Die Länge des Zugtrums L_{TZ} ergibt sich aus dem nicht mehr mit den Kettenrädern 3.2 und 2 stehenden Strangabschnitt der Steuerkette 4. Die Aufteilung ist derart, dass die Summe der Längen der nicht geführten Abschnitte 4.11, 4.12 und 4.13 größer ist als die Summe der Längen der geführten Abschnitte 4.14 und 4.15. Des Weiteren ist die Summe der Längen der ungeführten Abschnitte 4.11 und 4.13 kleiner als die Hälfte der Trumlänge L_{TZ}. Die bogenförmige Ausgestaltung der Führungsschiene 5 mit den beiden Kontaktbereichen 10 und 11 in Verbindung mit dem dazwischenliegenden Fensterdurchbruch 33 eröffnet ferner die Möglichkeit, die Führungsschiene 5 quasi um Gehäusekonturen, Gehäuseelemente und andere Strukturen herumzuführen, sowie diese Elemente und Konturen relativ nahe an die Außenseite der Steuerkette 4 heranzuführen. Hierdurch kann die Steuerkette 4 sehr nahe an der Gehäusekontur vorbeigeführt werden. Hierdurch können auch sehr beengte Bauraumverhältnisse optimal ausgenutzt werden. Der Abschnitt der größten Last ist insbesondere aufgrund der konvexen Form der Gleitflächen 14.1 und 15.1 im Wesentlichen oberhalb der Befestigungsösen 22 und 28 gelegen. Im Bereich des Fensterdurchbruchs 33 erfolgt überhaupt keine Lasteinbringung. Aufgrund dieser Lastaufteilung reduzieren sich die Spitzenkräfte, und aufgrund der verringerten Länge der Gleitflächen 14.1 und 15.1 ist auch die Reibung reduziert.

Auch wenn es hier nicht explizit dargestellt wurde, so kann das anhand der Figuren 2 und 3 dargestellte Konstruktionsprinzip für eine Führungsschiene 5 auch auf eine Spannschiene 6 in gleicher Weise übertragen werden. Anstelle der Befestigungsöse 22 im Einlaufbereich befindet sich dann an der Spannschiene 6 ein Aufdrückbereich zur Anlage des Spannkolbens 8. Die Spannschiene 6 weist dann ebenfalls zwei voneinander beabstandete Kontaktbereiche 10, 11 auf, die mittels des Nichtkontaktbereichs 12 (im konkreten Fall die beiden Seitenwangen 18.1, 18.2) miteinander verbunden sind.

Der in Figur 1 dargestellte Kettentrieb 1 weist an der Spannschiene 6 ein einziges durchgehendes Gleitelement auf.

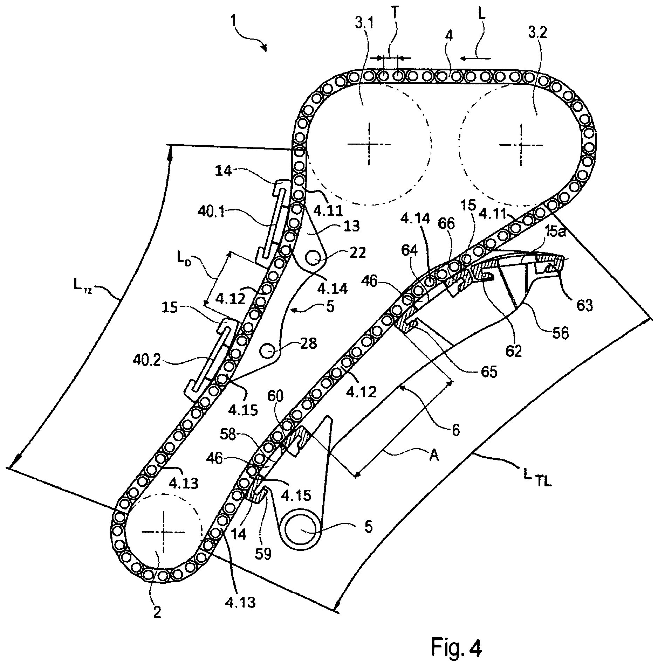

Im Folgenden wird anhand der Figuren 4 bis 12 eine weitere Ausführungsform der vorliegenden Erfindung erläutert. Es wird in der Folge nur auf die wesentlichen Unterschiede zum vorangegangenen Ausführungsbeispiel eingegangen. Sofern auf gleiche bzw. wirkungsgleiche Bauelemente Bezug genommen wird, werden gleiche Bezugsziffern verwendet und ergänzend auf die obige Beschreibung verwiesen.

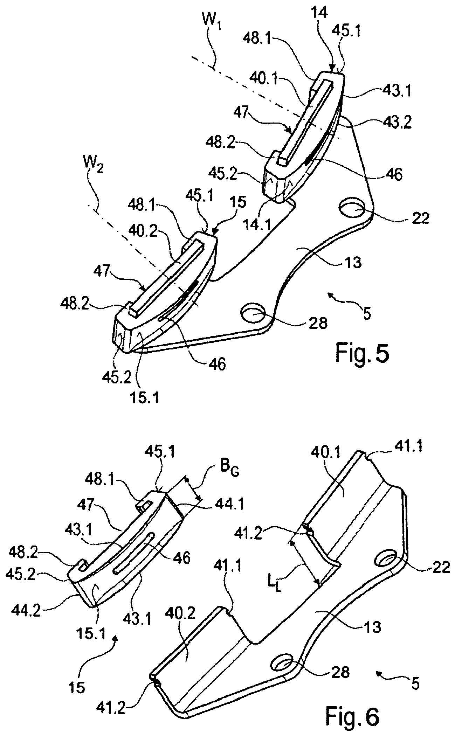

Der in Figur 4 dargestellte Steuerkettentrieb 1 verwendet eine Hülsenkette mit der Teilung T. Die Drehrichtung des Kurbelwellenkettenrads 2 ist entgegengesetzt zum Steuerkettentrieb 1 aus Figur 1, weshalb die Führungsschiene 5 und die Spannschiene 6 seitenvertauscht angeordnet sind. Die Führungsschiene 5 besteht aus drei Bauelementen. Dies sind zum einen ein Tragkörper 13 aus einem Stahlblech, sowie zwei mit dem Träger 13 verbundene Gleitelemente 14 und 15. Der Tragkörper 13 weist einen flachen Hauptteil mit zwei Befestigungsöffnungen 22, 28 auf, mit deren Hilfe er am Motorblock befestigt ist. Von diesem Hauptteil stehen zwei im rechten Winkel angebogene Befestigungslappen 40.1 und 40.2 vor. Die Befestigungslappen 40.1 und 40.2 bilden die Befestigungsabschnitte des ansonsten flachen Tragkörpers 13. Die vorstehende Länge L_{L} der Befestigungslappen 40.1 und 40.2 ist etwas größer als die Breite B_{G} des Gleitelementes 14 bzw. 15. Im geringen Abstand zu der freien Kante der Befestigungslappen 40.1 und 40.2 sind die Seitenkanten jeweils mit einer abgerundeten Ausnehmung 41.1 und 41.2 versehen (siehe Figuren 5 und 6).

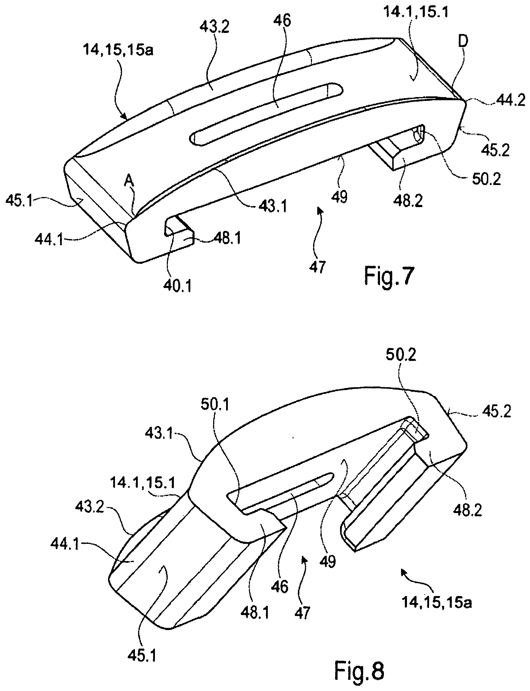

Die Gleitelemente 40.1 und 40.2 sind jeweils aus einem Kunststoff mit geringer Reibung hergestellt, was üblicherweise durch Spritzgießen erfolgt. An der Oberseite weist jedes Gleitelement 14,15 eine konvex gekrümmte Gleitfläche 14.1 bzw. 15.1 auf, die mit der Steuerkette 4 zur Anlage kommt. Die Gleitflächen 14.1, 15.1 sind seitlich durch Führungsbunde 43.1 und 43.2 begrenzt. Jeweils am vorderen und hinteren Ende gehen die Gleitflächen 14.1 und 15.1 unter Verwendung einer Abrundung 44.1 und 44.2 in die keilförmig aufeinander zulaufenden Seitenflächen 45.1 und 45.2 über. Die Gleitflächen 14.1 und 15.1 weisen in ihrer Mitte ein Langloch 46 auf, das durch das Material bis zur Rückseite durchgeht. An der Rückseite ist das Gleitelement 14, 15 mit einer im Querschnitt im Wesentlichen T-förmigen Aussparung 47 versehen. Aufgrund dieser T-förmigen Aussparung 47 entstehen an der Rückseite zwei vorstehende Schenkel 48.1 und 48.2. Der Abstand zwischen der Innenseite der Schenkel 48.1 und 48.2 und dem Grund 49 der T-förmigen Aussparung ist so gewählt, dass jeweils ein Befestigungslappen 40.1 bzw. 40.2 hineingeschoben werden kann. An einem Ende der T-förmigen Aussparung (in Figur 7 das vordere Ende) sind in der T-förmigen Aussparung Vorsprünge 50.1 und 50.2 vorgesehen, die in die Ausnehmungen 41.1 und 41.2 der Befestigungslappen 40.1 und 40.2 einrasten können. Aufgrund dieser Ausgestaltung lassen sich die Gleitelemente 14 und 15 sehr einfach seitlich auf die Befestigungslappen 40.1 bzw. 40.2 aufstecken und verrasten. Das Gleitelement 14 bzw. 15 ist dabei so elastisch, dass die Vorsprünge 50.1 und 50.2 an den Außenkanten der Befestigungslappen 40.1, 40.2 entlanggleiten und dann in die Ausnehmung 41.1 und 41.2 einrasten. Das freie Ende der Befestigungslappen 40.1 und 40.2 steht dann leicht vor. Die Oberseite der Befestigungslappen 40.1 und 40.2 deckt dann von unten das offene Langloch 46 ab. Hierin kann sich dann im späteren Betrieb Schmieröl ansammeln. Die beiden Befestigungslappen 40.1 und 40.2 weisen demnach eine gleiche Hüllkontur zur Befestigung der Gleitelemente 14 und 15 auf.

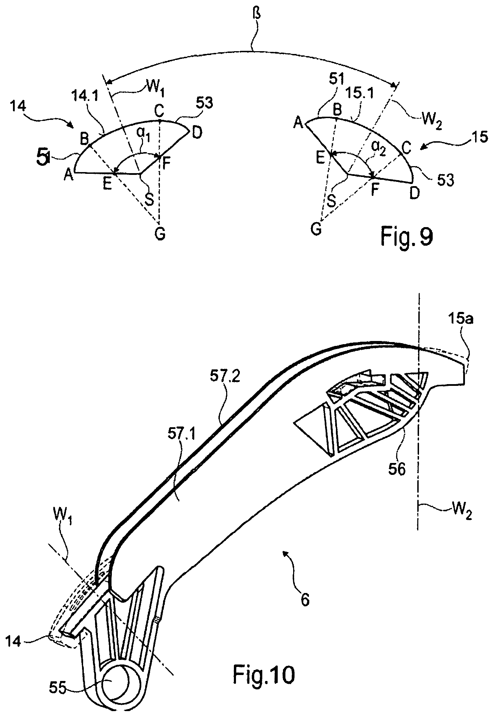

Bezüglich der Befestigungslappen 40.1 und 40.2 ist anzumerken, dass die leicht schräg zueinander laufen, das bedeutet, dass deren Oberseiten keine gemeinsame Ebene aufspannen bzw. nicht parallel zueinander ausgerichtet sind, sondern leicht im Winkel zueinander verkippt sind. Hierdurch werden auch die Gleitelemente 14 und 15 leicht zueinander verdreht. Anhand der Fig. 9 wird dies anhand eines Beispiels erläutert, bei dem sich die Gleitfläche 14.1 und 15.1 aus drei Abschnitten mit unterschiedlichen Krümmungsradien zusammensetzen. Aufgabe dieser Darstellung ist es im Wesentlichen, einen Öffnungswinkel α₁ und α₂ für das Gleitelement 14 bzw. 15 zu bestimmen und in der Folge einen entsprechenden Winkel β zwischen den Winkelhalbierenden W₁ und W₂ der beiden Öffnungswinkel α₁ und α₂ der Gleitelemente 14 und 15 zu ermitteln.

Jedes der Gleitelemente 14,15 weist an seiner Gleitfläche 14.1,15.1 einen Einlaufabschnitt 51, einen mittleren Abschnitt 52 und einen Auslaufabschnitt 53 auf. Der Einlaufabschnitt 51 des Gleitelementes 14 weist einen Krümmungsradius mit dem Abstand A-E auf. Der mittlere Abschnitt 52 weist einen Krümmungsradius mit dem Abstand B-G auf und der Auslaufabschnitt 53 weist einen Krümmungsradius mit dem Abstand D-F auf. Bei dieser Betrachtung liegen die Punkte A und D dort wo die eigentliche Gleitfläche 14.1 bzw.15.2 beginnt, also ohne die Abrundungen 44.1 und 44.2. Wenn dies nicht genau klar ist, kann hilfsweise ein Abstand von 5 mm von der jeweiligen Seitenfläche 45.1,45.2 angenommen werden.

Zur Ermittlung des Öffnungswinkels α₁ und α₂ wird die Linie A-E sowie die Linie D-F verlängert, so dass sich ein Schnittpunkt S bildet. Der zwischen diesen beiden Linien eingeschlossene Winkel ist der Öffnungswinkel α₁ und α₂. Anschließend wird die Winkelhalbierende W₁ bzw. W₂ des Winkels α₁ und α₂ gebildet. Die beiden Winkelhalbierenden W₁ und W₂ verlaufen in einem spitzen Winkel β zueinander.

Der Einlaufabschnitt 51 erstreckt sich zwischen den Punkten A und B. Der mittlere Abschnitt 52 erstreckt sich zwischen den Punkten B und C. Der Auslaufabschnitt 53 erstreckt sich zwischen den Punkten C und D.

Aufgrund dieser Schrägstellung bzw. gegeneinander Verdrehung der beiden Gleitelemente 14 und 15 erfolgt eine zielgerichtete Führung des Zugtrums 4.1 zwischen dem Kurbelwellenkettenrad 2 und dem Nockenwellenkettenrad 3.1. Der Abstand L_{D} zwischen den beiden Gleitelementen 14 und 15 beträgt im vorliegenden Fall etwa dem vierfachen der Kettenteilung T und ist somit größer als das dreifache, bevorzugt fünffache, der Kettenteilung T. In diesem Bereich erfährt die Kette 4 keine Unterstützung durch die Führungsschiene 5. Aufgrund der Verdrehung der Gleitelemente 14 und 15 um den Winkel β zueinander, erfolgt dennoch eine optimale Führung, die zu einer Beruhigung des Abschnitts der Steuerkette 4 zwischen den Gleitelementen 14 und 15 führt. Die Länge L_{TZ} des Zugtrums 4.1 ist in der Fig. 4 nur idealisiert eingezeichnet. Tatsächlich muss es sich hierbei um die Gesamtlänge des zwischen diesen Punkten liegenden Kettenstrangs handeln, der keinen geradlinigen Verlauf hat. Gleiches gilt auch für die geführten Abschnitte 4.14 und 4.15 und die ungeführten Abschnitte 4.11, 4.12 und 4.13. Die Summe der Längen der ungeführten Abschnitte 4.11, 4.12 und 4.13 ist wiederum größer als die Summe der Längen der geführten Abschnitte 4.14 und 4.15. Darüber hinaus ist die Summe der beiden Teillängen der ungeführten Abschnitte 4.11 und 4.13 der Steuerkette 4 kleiner als 50 % der Gesamtlänge L_{TZ} des Zugtrums 4.1.

In der Folge wird nunmehr unter Zuhilfenahme der Fig. 10 bis 12 der Aufbau der Spannschiene 6 näher erläutert. Hier kommen identisch ausgestaltete Gleitelemente 14 und 15 zum Einsatz, weshalb ergänzend auf die Fig. 7, 8 und 9 mit gleichen Bezugsziffern Bezug genommen wird. Diesbezüglich wird auf die obige Beschreibung verwiesen.

Die Spannschiene 6 weist einen Träger 54 aus einem faserverstärkten Kunststoffmaterial auf. Zum Teil ist dieser Träger 54 aus Stabilitätsgründen mit einer Fachwerkstruktur versehen. An dem einen Ende befindet sich ein angeformtes Schwenklager 55 und an dem anderen Ende ein konvexer Aufdrückbereich 56, auf den der nicht dargestellte Spannkolben eines Kettenspanners drückt. Der Träger 54 weist zwei hochgezogene Seitenwände 57.1 und 57.2 auf. In Fig. 4 ist die Spannschiene 6 im Vollschnitt dargestellt. Neben den beiden Gleitelementen 14 und 15 ist an der Spannschiene 6 noch ein weiteres, drittes Gleitelement 15a angefügt. Das Gleitelement 15a schließt im Wesentlichen unmittelbar an das Gleitelement 15 an, ist jedoch um einen weiteren Winkel zu diesem verdreht bzw. gekippt angeordnet, so dass es im freien Endbereich der Spannschiene 6 zu einer größeren bzw. anderen Anlage an die Kette 4 kommen kann. Dies hängt dann maßgeblich von der Schwenkstellung der Spannschiene 6 ab. In der Fig. 4 ist im Wesentlichen eine Stellung gezeigt, wie sie im Neuzustand der Kette 4 vorliegt. Im Laufe des Einsatzes erfolgt eine Kettenlängung aufgrund Verschleißes, wodurch die Spannschiene 6 gegen den Uhrzeigersinn immer weiter einschwenkt und vermehrt das Gleitelement 15a in Kontakt mit der Kette 4 tritt. Die Aneinanderreihung dieser identisch ausgebildeten Gleitelemente 15 und 15a sorgt bei der Spannschiene 6 für diese Funktionserweiterung. Zwischen dem Gleitelement 14 und 15 verbleibt ein Abstand A, der im vorliegenden Fall in etwa dem neunfachen der Teilung T entspricht.

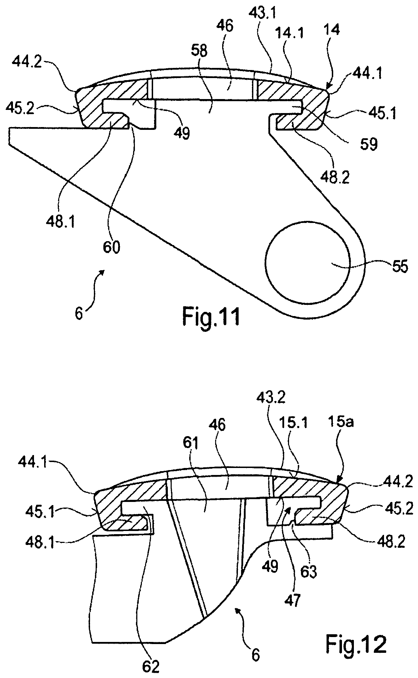

Im Folgenden wird nunmehr anhand der Fig. 11 und 12 die Anbringungsweise der Gleitelemente 14, 15 und 15a näher erläutert. Das Gleitelement 15a ist in gleicher Weise auf eine entsprechende Befestigungsstruktur am Träger 54 aufgeschoben.

Oberhalb des Schwenklagers 55 ist der Träger 54 mit einem Befestigungsblock 58 versehen, der einen einseitig vorstehenden Steg 59 aufweist. Die Abmessungen des Stegs 59 sind so, dass dieser in dem Bereich zwischen dem Grund 49 und dem Schenkel 48.2 eingeschoben werden kann. Der Steg 59 kann auch mit einer nicht dargestellten Ausnehmung, ähnlich einer Ausnehmung wie in den Befestigungslappen 40.1, 40.2, versehen sein, in die der Vorsprung 50.2 einrasten kann. Auf der gegenüberliegenden Seite weist der Befestigungsblock 58 einen solchen Steg 59 nicht auf. Dafür ist der Träger 54 mit einer Rastleiste 60 versehen, die an der Stirnseite des Schenkels 48.1 verrastbar ist. Hierzu wird das Gleitelement 14 so aufgesetzt, dass die Unterseite des Schenkels 48.1 auf der angeschrägten Rastleiste 60 liegt. Anschließend wird das Gleitelement 14 längs (in Fig. 11 nach links) verschoben, so dass der Steg 59 sich über den Schenkel 48.2 schiebt. Sobald das Gleitelement 14 weit genug verschoben wurde, schnappt die Stirnseite des Schenkels 48.1 an der Rastleiste 60 ein. Aufgrund der Seitenwände 57.1, 57.2 ist die seitliche Ausrichtung des Gleitelements 14 vorgegeben und der Vorsprung 50.2 kommt mit der nicht dargestellten Ausnehmung im Steg 59 zum Eingriff. Die Anbringung des Gleitelements 15a erfolgt in gleicher Weise und in gleicher Richtung (siehe Fig. 12). Hierzu ist am vorderen Ende des Trägers 54 ein Befestigungsblock 61 mit Steg 62 vorgesehen, sowie eine Rastleiste 63 vorhanden. Der Abstand zwischen der senkrechten Seite der Rastleiste 63 und der Stirnseite des Steges 62 ist größer als die Öffnungsbreite der T-förmigen Aussparung 47; jedoch der Abstand der Stirnseite des Steges 59 und der senkrechten Seite der Rastleiste 63 entspricht im Wesentlichen der größten Breite der T-förmigen Aussparung 47 abzüglich der Breite des Schenkels 48.2.

Die Befestigung des Gleitelements 15 erfolgt in gleicher Weise und in gleicher Richtung mit Hilfe eines identisch ausgestalteten Befestigungsblocks 64, eines Steges 65 und einer Rastleiste 66. In der Reihenfolge wird daher das Gleitelement 15a vor dem Gleitelement 15 angeordnet. Aufgrund dieser modularen Ausgestaltung besteht selbstverständlich die Möglichkeit, auch Schienen zu erzeugen, bei denen noch mehr dieser Gleitelemente direkt hintereinander angeordnet werden. Aufgrund der zueinander verkippten bzw. verdrehten Anordnung der Gleitelemente 14. 15, 15a lassen sich auch in Abhängigkeit des gewählten Winkels unterschiedliche Krümmungen erzeugen.

Der besondere Vorteil dieser Ausgestaltung liegt darin, dass nach Art eines Baukastens zwei unterschiedliche Träger, nämlich Träger 13 und 54 bereitgestellt werden, die jeweils mit identisch ausgestalteten Gleitelementen 14, 15 und 15a bestückt werden. Dies eröffnet demnach die Möglichkeit, verschiedenste Gleit- und Spannschienen zu erzeugen, indem ausschließlich entsprechend angepasste Träger zur Verfügung gestellt werden. Der Gleitbelag wird ausschließlich durch Gleitelemente des Baukastensystems erzeugt. Innerhalb des Baukastensystems ist es natürlich von besonderem Vorteil, wenn sämtliche Gleitelemente identisch ausgebildet sind. Alternativ besteht natürlich die Möglichkeit, dass z.B. Gleitelemente in unterschiedlichen Längen oder mit unterschiedlichen Krümmungsradien im Baukastensystem vorhanden sind, um die Variationsmöglichkeiten noch einmal zu erhöhen. Die Befestigungsblöcke 58, 61, 64 weisen demnach eine identische Hüllkontur zur Befestigung der Gleitelemente 14, 15 und 15a auf.

Bei der Führungsschiene 5 beträgt die führende Länge des Gleitelements 14 ungefähr 6-mal die Kettenteilung T und die führende Länge des Gleitelements 15 ungefähr 5-mal der Kettenteilung T (und ist demnach kleiner als 10-mal die Kettenteilung T und größer als 2,5-mal die Kettenteilung T). Bei der Spannschiene 6 verhält es sich so, dass die führende Länge des Gleitelements 14 ungefähr 6-mal der Kettenteilung T und die führende Länge des Gleitelements 15 ungefähr 6-mal der Kettenteilung T entspricht (erfüllt demnach die Vorgaben kleiner als 10-mal die Kettenteilung T und größer als 2,5-mal die Kettenteilung T zu sein). Auch beim Lostrum 4.2 ist wieder eine idealisierte Längung L_{TL} eingezeichnet. Die tatsächliche Länge entspricht der wahren Länge des Kettenstücks in diesem Bereich. Auch beim Lostrum 4.2 verhält es sich so, dass die Längen der ungeführten Abschnitte 4.11, 4.12, 4.13 der Steuerkette 4 in Summe größer sind als die Längen der geführten Abschnitte 4.14 und 4.15 der Steuerkette 4. Des Weiteren wurde Wert darauf gelegt, dass bereits im dargestellten Neuzustand der Steuerkette 4 die Summe der Längen der ungeführten Abschnitte 4.11 und 4.13 kleiner ist als die Hälfte der Länge L_{TL} des Lostrums 4.2.

Darüber hinaus ist zu erkennen, dass der Steuerkettentrieb 1 die Anforderung erfüllt, dass die Gesamtanzahl der Gleitelemente 14, 15 und 15a der beiden längsten Trume 4.1 und 4.2, die im vorliegenden fall fünf beträgt, größer ist als die Anzahl der Kettenräder, die im vorliegenden Fall drei beträgt (und somit die Bedingung erfüllt, dass die Anzahl der Gleitelemente mindestens der Anzahl der Kettenräder plus 1 entspricht).

Durch die erfindungsgemäße Ausgestaltung können Vorteile hinsichtlich der Reibung, des Gewichts, der Material- und Herstellungskosten sowie eine Bauraumoptimierung erzielt werden. Günstig wirkt sich hierbei auch das Gleichteilekonzept aus. Darüber hinaus ergeben sich Vorteile beim Schwingungsverhalten bzw. der Kettentrieb 1 kann derart konstruiert werden, dass in Bereichen, in denen Schwingungen besonders stark auftreten, zusätzliche Gleitelemente angebracht werden können.

Bei der Führungsschiene 5 beträgt die führende Länge des Gleitelements 14 ungefähr 6-mal die Kettenteilung T und die führende Länge des Gleitelements 15 ungefähr 5-mal der Kettenteilung T (und ist demnach kleiner als 10-mal die Kettenteilung T und größer als 2,5-mal die Kettenteilung T). Bei der Spannschiene 6 verhält es sich so, dass die führende Länge des Gleitelements 14 ungefähr 6-mal der Kettenteilung T und die führende Länge des Gleitelements 15 ungefähr 6-mal der Kettenteilung T entspricht (erfüllt demnach die Vorgaben kleiner als 10-mal die Kettenteilung T und größer als 2,5-mal die Kettenteilung T zu sein). Auch beim Lostrum 4.2 ist wieder eine idealisierte Längung L_{TL} eingezeichnet. Die tatsächliche Länge entspricht der wahren Länge des Kettenstücks in diesem Bereich. Auch beim Lostrum 4.2 verhält es sich so, dass die Längen der ungeführten Abschnitte 4.11, 4.12, 4.13 der Steuerkette 4 in Summe größer sind als die Längen der geführten Abschnitte 4.14 und 4.15 der Steuerkette 4. Des Weiteren wurde Wert darauf gelegt, dass bereits im dargestellten Neuzustand der Steuerkette 4 die Summe der Längen der ungeführten Abschnitte 4.11 und 4.13 kleiner ist als die Hälfte der Länge L_{TL} des Lostrums 4.2.

Darüber hinaus ist zu erkennen, dass der Steuerkettentrieb 1 die Anforderung erfüllt, dass die Gesamtanzahl der Gleitelemente 14, 15 und 15a der beiden längsten Trume 4.1 und 4.2, die im vorliegenden fall fünf beträgt, größer ist als die Anzahl der Kettenräder, die im vorliegenden Fall drei beträgt (und somit die Bedingung erfüllt, dass die Anzahl der Gleitelemente mindestens der Anzahl der Kettenräder plus 1 entspricht).

Durch die erfindungsgemäße Ausgestaltung können Vorteile hinsichtlich der Reibung, des Gewichts, der Material- und Herstellungskosten sowie eine Bauraumoptimierung erzielt werden. Günstig wirkt sich hierbei auch das Gleichteilekonzept aus. Darüber hinaus ergeben sich Vorteile beim Schwingungsverhalten bzw. der Kettentrieb 1 kann derart konstruiert werden, dass in Bereichen, in denen Schwingungen besonders stark auftreten, zusätzliche Gleitelemente angebracht werden können.

### Bezugszeichenliste

- 1: Steuerkettentrieb
- 2: Kurbelwellenkettenrad
- 3.1,3.2: Nockenwellenkettenrad
- 4: Steuerkette
- 5: Führungsschiene
- 6: Spannschiene
- 7: Kettenspanner
- 8: Spannkolben
- 9: Wandung
- 10: erster Kontaktbereich
- 11: zweiter Kontaktbereich
- 12: Nichtkontaktbereich
- 13: Tragkörper
- 14: erstes Gleitelement
- 15: zweites Gleitelement
- 15a: drittes Gleitelement
- 16: erste Tragstruktur
- 17: zweite Tragstuktur
- 18.1,18.2: Seitenwangen
- 19: Stirnwand
- 20: Rückwand
- 21: Vorderwand
- 22: Befestigungsöse
- 23: Querstrebe
- 24: Stützwand
- 25: Stirnwand
- 26: Rückwand
- 27: Vorderwand
- 28: Befestigungsöse
- 29: Querstrebe
- 30: Stützwand
- 31: Oberseite
- 32: Unterseite
- 33: Fensterdurchbruch
- 34: Kontur
- 35: Außenseite
- 40.1,40.2: Befestigungslappen
- 41: Ausnehmung
- 42: Gleitfläche
- 43.1,43.2: Führungsbund
- 44.1.44.2: Übergangsradius
- 45.1,45.2: Seitenfläche
- 46: Langloch
- 47: T-förmige Aussparung
- 48.1,48.2: Schenkel
- 49: Grund
- 50.1,50.2: Vorsprung
- 51: Einlaufabschnitt
- 52: mittlerer Abschnitt
- 53: Auslaufabschnitt
- 55: Schwenklager
- 56: konvexer Aufdrückbereich
- 57.1,57.2: Seitenwand
- 58.1,58.2: Befestigungsblock
- 59: Steg
- 60: Rastleiste
- 61: Befestigungsblock
- 62: Steg
- 63: Rastleiste
- 64: Befestigungsblock
- 65: Steg
- 66: Rastleiste

- T: Teilung
- L_{L}: Länge
- B_{G}: Breite
- α₁,α₂: Öffnungswinkel
- S: Schnittpunkt
- W₁,W₂: Winkelhalbierende
- β: Winkel
- A: Abstand
- B_{D}: Breite (Fensterdurchbruch)
- H: Höhe
- L: Länge
- L_{D}: Länge (Fensterdurchbruch) bzw. Abstand
- L_{TL}: Länge (Lostrum)
- L_{TZ}: Länge (Zugtrum)

## Patentansprüche

1. Kettentrieb (1) für einen Verbrennungsmotor mit einem Antriebskettenrad (2) und mindestens einem Abtriebskettenrad (3.1,3.2), einer die Kettenräder (2,3.1,3.2) miteinander koppelnden Antriebskette (4), und mindestens einer am Motorgehäuse befestigten und am Zugtrum (4.1) anliegenden Führungsschiene (5) und/oder einer schwenkbar am Motorgehäuse angeordneten und mittels eines Kettenspanners (7) an das Lostrum (4.2) angedrückten Spannschiene (6) zum Führen und/oder Spannen der Antriebskette (4), wobei zumindest die Führungs- und/oder die Spannschiene (5,6) mindestens zwei im ungeführten Abstand (L_{D},A) zueinander angeordnete Gleitelemente (14,15,15a) zur Anlage an der selben Seite der Antriebskette (4) derart aufweist bzw. aufweisen, dass mindestens zwei Gleitelemente (14,15,15a) in dem Zugtrum (4.1) und/oder dem Lostrum (4.2) des Kettentriebs (1) angeordnet sind, und wobei zumindest in dem Zugtrum (4.1) und/oder dem Lostrum (4.2) das Verhältnis von geführter Kettenlänge zu ungeführter Kettenlänge kleiner ist als 1, **dadurch gekennzeichnet, dass** im Zugtrum (4.1) und/oder im Lostrum (4.2), an dem entsprechend die Führungs- und/oder die Spannschiene (5,6) mit mindestens zwei im ungeführten Abstand (L_{D},A) zueinander angeordneten Gleitelementen (14,15,15a) anliegt bzw. anliegen, die Summe der ungeführten Längen der Antriebskette (4) zwischen einem Gleitelement (14,15,15a) und dem jeweils nächsten Kettenrad (2,3.1,3.2) kleiner ist als 0,5-mal die gesamte Länge (L_{TZ}, L_{TL}) des entsprechenden Trums (4.1,4.2).

2. Kettentrieb (1) nach Anspruch 1, **dadurch gekennzeichnet, dass** beim Zugtrum (4.1) und beim Lostrum (4.2) des Kettentriebs (4) entsprechend die Führungs- oder die Spannschiene (5,6) mit mindestens zwei im ungeführten Abstand ((L_{D},A)) zueinander angeordneten Gleitelementen (14,15,15a) vorhanden ist, das Verhältnis von geführter Kettenlänge zu ungeführter Kettenlänge kleiner ist als 1 ist und die Summe der ungeführten Längen der Antriebskette zwischen einem Gleitelement (14,15,15a) und dem jeweils nächsten Kettenrad (2,3.1,3.2) kleiner als 0,5-mal die gesamte Länge (L_{TZ},L_{TL}) des entsprechenden Trums (4.1,4.2) ist.

3. Kettentrieb (1) nach Anspruch 1 oder 2, **dadurch gekennzeichnet, dass** der ungeführte Abstand (L_{D}, A) von mindestens zwei an der Führungs- und/oder der Spannschiene (5,6) angeordneten Gleitelementen (14,15,15a) größer ist als 3-mal, bevorzugt 5-mal, der Kettenteilung (T) der Antriebskette (4).

4. Kettentrieb (1) nach einem der vorhergehenden Ansprüche, **dadurch gekennzeichnet, dass** die führende Länge von mindestens zwei Gleitelementen (14,15,15a) der Führungs- und/oder der Spannschiene (5,6) kleiner ist als 10-mal die Kettenteilung (T) der Antriebskette (4).

5. Kettentrieb (1) nach Anspruch 4, **dadurch gekennzeichnet, dass** die führende Länge von den mindestens zwei Gleitelementen (14,15,15a) größer ist als 2,5-mal, bevorzugt größer als 3-mal, die Kettenteilung (T) der Antriebskette (4).

6. Kettentrieb (1) nach einem der vorhergehenden Ansprüche, **dadurch gekennzeichnet, dass** die Gesamtanzahl der Gleitelemente (14,15,15a) der an dem Zugtrum (4.1) ( anliegenden Führungsschiene (5) und der an dem Lostrum (4.2) anliegenden Spannschiene (6) mindestens der Anzahl der Kettenräder (2,3.1,3.2) des Kettentriebs (1) plus 1, bevorzugt plus 2, entspricht.

7. Kettentrieb (1) nach Anspruch 6, **dadurch gekennzeichnet, dass** die Anzahl der Kettenräder (2,3.1,3.2) mindestens drei, bevorzugt genau 3, entspricht.

8. Kettentrieb (1) nach einem der vorhergehenden Ansprüche, **dadurch gekennzeichnet, dass** die Gleitelemente (14,15,15a) der Führungs- und/oder der Spannschiene(n) (5,6) die gleiche Größe und Form aufweisen.

9. Kettentrieb (1) nach einem der vorhergehenden Ansprüche, **dadurch gekennzeichnet, dass** die Führungs- und/oder die Spannschiene (5,6) einen Tragkörper (13,54) aufweist bzw. aufweisen, an dem die Gleitelemente (14,15,15a) angebracht sind.

10. Kettentrieb (1) nach Anspruch 9, **dadurch gekennzeichnet, dass** der Tragkörper (13,54) mindestens zwei in ihrer Hüllkontur identische Befestigungsabschnitte für die Gleitelemente (14,15,15a) aufweisen.

11. Kettentrieb (1) nach Anspruch 10, **dadurch gekennzeichnet, dass** mindestens zwei Gleitelemente (14,15,15a) der Führungs- und/oder der Spannschiene (5,6) identische Baukastenteile sind.

12. Kettentrieb (1) nach einem der vorhergehenden Ansprüche, **dadurch gekennzeichnet, dass** die Führungs- und/oder die Spannschiene (5,6) zwei im Abstand zueinander angeordnete Seitenwangen aufweist, zwischen denen teilweise die Gleitflächen (14.1,15.1) der im ungeführten Abstand zueinander angeordneten Gleitelemente (14,15) angeordnet sind, so dass ein Fensterdurchbruch (33) zwischen den Gleitelementen (14,15) und den Seitenwangen ausgebildet ist.

13. Kettentrieb (1) nach einem der vorhergehenden Ansprüche, **dadurch gekennzeichnet, dass** jedes Gleitelement (14,15,15a) eine in Laufrichtung der Antriebskette (4) konvex gekrümmte Gleitfläche (14.1,15.1) aufweist, und die Winkelhalbierenden (W₁,W₂) der beiden Öffnungswinkel (α₁,α₂) von konvex gekrümmten Gleitflächen (14.1,15.1) der Gleitelemente (14,15,15a) der Führungs- und/oder der Spannschiene (5,6) in einem Winkel (β) ungleich 0° zueinander verlaufen.

14. Kettentrieb (1) nach einem der vorhergehenden Ansprüche, **dadurch gekennzeichnet, dass** die konvex gekrümmten Gleitflächen (14.1,15.1) der Gleitelemente (14,15,15a) der Führungs- und/oder der Spannschiene (5,6) voneinander verschiedene Krümmungsmittelpunkte aufweisen.

## Claims

1. A chain drive (1) for an internal combustion engine, comprising a driving sprocket (2) and at least one driven sprocket (3.1, 3.2), a drive chain (4) coupling the sprockets (2, 3.1, 3.2) to each other, and comprising at least one guide rail (5),whereby the guide rail is fixed to the engine case and contacts the tight span (4.1), and/or comprising one tensioning rail (6) for guiding and/or tensioning the drive chain (4), whereby the tensioning rail is pivotally arranged on the engine case and pressed against the slack span (4.2) by means of a chain tensioner (7), wherein at least the guide rail (5) and/or the tensioning rail (6) comprises_or comprise at least two slide elements (14, 15, 15a), arranged at a non-guided distance (L_{D}, A) from one another for contacting the same side of the drive chain (4), such that at least two slide elements (14, 15, 15a) are arranged in the tight span (4.1) and/or the slack span (4.2) of the chain drive (1), and wherein in at least the tight span (4.1) and/or the slack span (4.2) the ratio of guided chain length to non-guided chain length is smaller than 1, **characterized in that** in at least the tight span (4.1) and/or the slack span (4.2), which is or are respectively in contact with the guide rail (5) and/or the tensioning rail (6) with at least two slide elements (14, 15, 15a) arranged at a non-guided distance (L_{D}, A) from one another, the sum of the non-guided lengths of the drive chain (4) between a slide element (14, 15, 15a) and the respective nearest sprocket (2, 3.1, 3.2) is smaller than 0.5 times the total length (L_{TZ}, L_{TL}) of the respective span (4.1, 4.2).

2. The chain drive (1) according to claim 1, **characterized in that**, in the tight span (4.1) or the slack span (4.2) of the chain drive (4), the guide rail (5) or the tensioning rail (6) with at least two slide elements (14, 15, 15a) arranged at a non-guided distance (L_{D}, A) from one another is respectively provided, the ratio from guided chain length to non-guided chain length is smaller than 1, and the sum of the non-guided lengths of the drive chain between a slide element (14, 15, 15a) and the respective nearest sprocket (2, 3.1, 3.2) is smaller than 0.5 times the total length (L_{TZ}, L_{TL}) of the respective span (4.1, 4.2).

3. The chain drive (1) according to claim 1 or 2, **characterized in that**, the non-guided distance (L_{D}, A) between at least two slide elements (14, 15, 15a) arranged on the guide rail (5) and/or the tensioning rail (6) is larger than 3 times, preferably 5 times, the chain pitch (T) of the drive chain (4).

4. The chain drive (1) according to one of the preceding claims, **characterized in that** the guiding length of at least two slide elements (14, 15, 15a) of the guide rail (5) and/or the tensioning rail (6) is smaller than 10 times the chain pitch (T) of the drive chain (4).

5. The chain drive (1) according to claim 4, **characterized in that** the guiding length of the at least two slide elements (14, 15, 15a) is larger than 2.5 times, preferably larger than 3 times, the chain pitch (T) of the drive chain (4).

6. The chain drive (1) according to one of the preceding claims, **characterized in that** the total number of the slide elements (14, 15, 15a) of the guide rail (5) contacting the tight span (4.1) and tensioning rail (6) contacting the slack span (4.2) corresponds at least to the number of sprockets (2, 3.1, 3.2) of the chain drive (1) plus 1, preferably plus 2.

7. The chain drive (1) according to claim 6, **characterized in that** the number of sprockets (2, 3.1, 3.2) corresponds at least to 3, and is preferably precisely 3.

8. The chain drive (1) according to one of the preceding claims, **characterized in that** the slide elements (14, 15, 15a) of the guide and/or tensioning rail(s) (5, 6) are identical in size and shape.

9. The chain drive (1) according to one of the preceding claims, **characterized in that** the guide and/or tensioning rail (5, 6) comprises or comprise a support body (13, 54) having the slide elements (14, 15, 15a) mounted thereon.

10. The chain drive (1) according to claim 9, **characterized in that** the support body (13, 54) comprises at least two fastening portions for the slide elements (14, 15, 15a), said fastening portions having identical outer contours.

11. The chain drive (1) according to claim 10, **characterized in that** at least two slide elements (14, 15, 15a) of the guide rail (5) and/or the tensioning rail (6) are identical modular parts.

12. The chain drive (1) according to one of the preceding claims, **characterized in that** the guide rail (5) and/or the tensioning rail (6) comprises two spaced-apart side elements, the sliding-contact surfaces (14.1, 15.1) of the slide elements (14, 15), which are arranged at a non-guided distance from one another, being partially arranged between these side elements, so that a window opening (33) is formed between the slide elements (14, 15) and the side elements.

13. The chain drive (1) according to one of the preceding claims, **characterized in that** each slide element (14, 15, 15a) has a sliding-contact surface (14.1, 15.1) that is convex in the direction of movement of the drive chain (4), and that the angle bisectors (W₁, W₂) of the two opening angles (α₁, α₂) of convex sliding-contact surfaces (14.1, 15.1) of the slide elements (14, 15, 15a) of the guide rail (5) and/or the tensioning rail (6) extend relative to one another at a non-zero angle (β).

14. The chain drive (1) according to one of the preceding claims, **characterized in that** the convex sliding-contact surfaces (14.1, 15.1) of the slide elements (14, 15, 15a) of the guide rail (5) and/or the tensioning rail (6) have different centers of curvature.

## Revendications

1. Transmission d'entrainement à chaine (1) pour un moteur à combustion interne comprenant une roue dentée à chaine menante (2) et au moins une roue dentée à chaine menée (3.1, 3.2), une chaine d'entrainement (4) assurant le couplage mutuel des roues à chaine (2, 3.1, 3.2), et au moins une glissière de guidage (5) fixée au carter de moteur et s'appliquant contre le brin tendu (4.1), et/ou une glissière de tendeur (6) agencée de manière pivotante sur le carter de moteur et appuyée au moyen d'un tendeur de chaine (7) contre le brin mou (4.2), en vue de guider et/ou de tendre la chaine d'entrainement (4), transmission
dans laquelle au moins la glissière de guidage et/ou la glissière de tendeur (5, 6) présente ou présentent au moins deux éléments de glissement (14, 15, 15a), qui sont agencés en étant espacés mutuellement d'une distance d'espacement de non guidage (L_{D}, A) et sont destinés à venir s'appliquer sur le même côté de la chaine d'entrainement (4), de manière telle qu'au moins deux éléments de glissement (14, 15, 15a) soient agencés sur le brin tendu (4.1) et/ou sur le brin mou (4.2) de l'entrainement à chaine (1),
et dans laquelle au moins dans le brin tendu (4.1) et/ou le brin mou (4.2), le rapport de la longueur de chaine guidée à la longueur de chaine non guidée est inférieur à 1,
**caractérisée en ce que** dans le brin tendu (4.1) et/ou dans le brin mou (4.2) contre lequel vient ou viennent s'appliquer de manière correspondante la glissière de guidage et/ou la glissière de tendeur (5, 6) avec au moins deux éléments de glissement (14, 15, 15a) agencés en étant espacés mutuellement d'une distance d'espacement de non guidage (L_{D}, A), la somme des longueurs non guidées de la chaine d'entrainement (4) entre un élément de glissement (14, 15, 15a) et la roue dentée à chaine (2, 3.1, 3.2) respectivement la plus proche, est inférieure à 0,5 fois la longueur totale (L_{TZ}, L_{TL}) du brin (4.1, 4.2) correspondant.

2. Transmission d'entrainement à chaine (1) selon la revendication 1, **caractérisée en ce que** de manière correspondante pour le brin tendu (4.1) et pour le brin mou (4.2) de la transmission d'entrainement à chaine (4), il est prévu la glissière de guidage ou la glissière de tendeur (5, 6) avec au moins deux éléments de glissement (14, 15, 15a) agencés en étant espacés mutuellement d'une distance d'espacement de non guidage (L_{D}, A), le rapport de la longueur de chaine guidée à la longueur de chaine non guidée est inférieur à 1, et la somme des longueurs non guidées de la chaine d'entrainement entre un élément de glissement (14, 15, 15a) et la roue dentée à chaine (2, 3.1, 3.2) respectivement la plus proche, est inférieure à 0,5 fois la longueur totale (L_{TZ}, L_{TL}) du brin (4.1, 4.2) correspondant.

3. Transmission d'entrainement à chaine (1) selon la revendication 1 ou la revendication 2, **caractérisée en ce que** la distance d'espacement de non-guidage (L_{D}, A) d'au moins deux éléments de glissement (14, 15, 15a) agencés sur la glissière de guidage et/ou la glissière de tendeur (5, 6), est supérieure à 3 fois, de préférence à 5 fois, le pas de chaine (T) de la chaine d'entrainement (4).

4. Transmission d'entrainement à chaine (1) selon l'une des revendications précédentes, **caractérisée en ce que** la longueur de guidage d'au moins deux éléments de glissement (14, 15, 15a) de la glissière de guidage et/ou de la glissière de tendeur (5, 6) est inférieure à 10 fois le pas de chaine (T) de la chaine d'entrainement (4).

5. Transmission d'entrainement à chaine (1) selon la revendication 4, **caractérisée en ce que** la longueur de guidage desdits au moins deux éléments de glissement (14, 15, 15a) est supérieure à 2,5 fois, de préférence supérieure à 3 fois, le pas de chaine (T) de la chaine d'entrainement (4).

6. Transmission d'entrainement à chaine (1) selon l'une des revendications précédentes, **caractérisée en ce que** le nombre total des éléments de glissement (14, 15, 15a) de la glissière de guidage (5) en appui sur le brin tendu (4.1) et de la glissière de tendeur (6) en appui sur le brin mou (4.2) correspond au moins au nombre des roues dentée à chaine (2, 3.1, 3.2) de la transmission d'entrainement (1) plus 1, de préférence plus 2.

7. Transmission d'entrainement à chaine (1) selon la revendication 6, **caractérisée en ce que** le nombre des roues dentées à chaine (2, 3.1, 3.2) correspond au moins à trois, de préférence exactement à trois.

8. Transmission d'entrainement à chaine (1) selon l'une des revendications précédentes, **caractérisée en ce que** les éléments de glissement (14, 15, 15a) de la glissière de guidage et/ou de la glissière de tendeur (5,6) présentent la même grandeur et la même forme.

9. Transmission d'entrainement à chaine (1) selon l'une des revendications précédentes, **caractérisée en ce que** la glissière de guidage et/ou la glissière de tendeur (5, 6) présente ou respectivement présentent un corps de support (13, 54) sur lequel sont placés les éléments de glissement (14, 15, 15a).

10. Transmission d'entrainement à chaine (1) selon la revendication 9, **caractérisée en ce que** les corps de support (13, 54) présentent deux tronçons de fixation identiques dans leur contour d'enveloppe, pour les éléments de glissement (14, 15, 15a).

11. Transmission d'entrainement à chaine (1) selon la revendication 10, **caractérisée en ce qu'**au moins deux éléments de glissement (14, 15, 15a) de la glissière de guidage et/ou de la glissière de tendeur (5, 6) sont des pièces modulaires identiques.

12. Transmission d'entrainement à chaine (1) selon l'une des revendications précédentes, **caractérisée en ce que** la glissière de guidage et/ou la glissière de tendeur (5, 6) présente deux joues latérales agencées à distance l'une de l'autre, et entre lesquelles sont agencées en partie les surfaces de glissement (14.1, 15.1) des éléments de glissement (14, 15) agencés en étant espacés mutuellement d'une distance d'espacement de non-guidage, de sorte qu'entre les éléments de glissement (14, 15) et les joues latérales, est formée une fenêtre de passage (33).

13. Transmission d'entrainement à chaine (1) selon l'une des revendications précédentes, **caractérisée en ce que** chaque élément de glissement (14, 15, 15a) présente une surface de glissement (14.1, 15.1) à courbure convexe dans la direction de circulation de la chaine d'entrainement (4), et les bissectrices (W1, W2) des deux angles d'ouverture (α1, α2) de surfaces de glissement (14.1, 15.1) de courbure convexe des éléments de glissement (14, 15, 15a) de la glissière de guidage et/ou de la glissière de tendeur (5, 6), s'étendent selon un angle (β) différent de 0° l'une par rapport à l'autre.

14. Transmission d'entrainement à chaine (1) selon l'une des revendications précédentes, **caractérisée en ce que** les surfaces de glissement (14.1, 15.1) de courbure convexe des éléments de glissement (14, 15, 15a) de la glissière de guidage et/ou de la glissière de tendeur (5, 6), présentent des centres de courbure mutuellement différents.
